Europäisches Patentamt

European Patent Office

Office européen des brevets

(19)

(11) **EP 0 544 962 B1**

(12) **FASCICULE DE BREVET EUROPEEN**

(45) Date de publication et mention
de la délivrance du brevet:
**05.03.1997 Bulletin 1997/10**

(51) Int Cl.6: **G01N 21/35**

(21) Numéro de dépôt: **91403281.8**

(22) Date de dépôt: **04.12.1991**

(54) **Procédé et dispositif de détection optique à distance d'un gaz présent dans une zone d'espace observée**

**Verfahren und Vorrichtung zur optischen Ferndetektion eines sich in einem beobachteten Raumgebiet befindenden Gases**

**Method and apparatus for the remote optical detection of a gas in an observed region of space**

(84) Etats contractants désignés:
**AT BE CH DE DK ES FR GB GR IT LI LU MC NL SE**

(43) Date de publication de la demande:
**09.06.1993 Bulletin 1993/23**

(73) Titulaire: **BERTIN & CIE**
**F-78373 Plaisir Cédex (FR)**

(72) Inventeurs:
• **Noack, Jean-Claude**
**F-13480 Cabries (FR)**
• **Guern, Yves**
**F-13490 Jouques (FR)**
• **Pelous, Gérard**
**F-13100 Aix en Provence (FR)**

(74) Mandataire: **Ramey, Daniel et al**
**Cabinet Ores**
**6 Avenue de Messine**
**75008 Paris (FR)**

(56) Documents cités:
EP-A- 0 348 141        GB-A- 2 176 889
US-A- 4 390 785        US-A- 4 725 733
US-A- 5 001 346        US-A- 5 026 992

• OPTICAL ENGINEERING. vol. 28, no. 8, Août
1989, BELLINGHAM US pages 872 - 880; X.
MALDAGUE ET AL: 'Dual imager and its
applications to active vision robot welding,
surface inspection, and two-color pyrometry'

## Description

L'invention concerne un procédé et un dispositif de détection optique à distance d'un gaz, par exemple d'un gaz polluant, présent dans une zone d'espace observée.

On sait que les gaz sont caractérisés notamment par des raies d'absorption moléculaire ou atomique à des longueurs d'onde déterminées de façon très précise et que l'on peut, par identification d'une ou de plusieurs raies d'absorption, détecter la présence d'un gaz dans l'atmosphère.

On peut pour cela utiliser un système du type "lidar" comprenant un laser émettant des impulsions en direction d'une zone d'espace observée, sur une longueur d'onde qui correspond à une raie d'absorption du gaz recherché. On détecte les signaux rétro-diffusés par l'atmosphère et on en déduit la présence ou l'absence du gaz dans l'atmosphère.

Ce système connu présente un certain nombre d'inconvénients, dont son coût relativement élevé, son poids et son encombrement, des utilisations limitées aux longueurs d'onde des impulsions laser, et des risques liés à l'émission d'impulsions d'énergie élevée (danger pour l'oeil, risques d'explosion dans certains environnements, par exemple de gaz de pétrole ou de gaz chimique).

On a également proposé de détecter la présence d'un gaz dans l'atmosphère par des techniques de radiométrie ou spectroscopie, permettant d'obtenir une distribution spectrale d'énergie reçue ou transmise sur une bande de longueurs d'onde, ces techniques étant basées sur le fait qu'un gaz qui absorbe de l'énergie à une certaine longueur d'onde, réemet aussi de l'énergie à cette longueur d'onde. Toutefois, ces techniques ont une sensibilité très variable. Il faut en effet, pour obtenir une sensibilité élevée, maîtriser l'émittance spectrale de la source et disposer l'émetteur et le récepteur de part et d'autre de la zone observée ou, lorsque l'émetteur et le récepteur sont du même côté de la zone observée, disposer un réflecteur de l'autre côté de cette zone, ce qui nécessite deux points d'accès à cette zone et fixe le chemin optique de la mesure. Dans les autres cas où les caractéristiques de l'émetteur, en particulier sa température, ne sont pas maîtrisées, les résultats obtenus dépendent de la différence entre la température du gaz et celle du fond ou de la scène qui se trouve derrière le gaz et qui sert d'émetteur, la sensibilité étant nulle quand cette différence est nulle.

On connaît, par le document GB-A-2 176 889, des moyens de détection optique d'un gaz utilisant deux filtres dont l'un a une bande de transmission centrée sur une raie d'absorption caractéristique du gaz et dont l'autre a une bande de transmission qui comprend des longueurs d'onde pour lesquelles le gaz à détecter n'a pas de raie d'absorption ou qui est constituée de longueurs d'onde pour lesquelles le gaz à détecter ne présente pas d'absorption, et des moyens pour faire le rapport des signaux fournis par les deux filtres et en déduire éventuellement la présence du gaz recherché dans la zone observée. Toutefois, ces moyens ne peuvent fonctionner que si le gaz est relativement froid par rapport à l'atmosphère environnante.

On connaît également, par le document US-A-4 390 785, des moyens de détection d'un gaz dans l'atmosphère comprenant deux voies de détection dont l'une est sensible au gaz détecté et dont l'autre ne l'est pas et des moyens pour faire le rapport des signaux fournis par ces deux voies et en déduire la présence d'un gaz dans l'atmosphère observée, ces moyens ne fonctionnant toutefois que s'il y a une différence de température entre l'atmosphère contenant le gaz recherché et l'arrière-plan de la scène observée.

Par le document US-A-4 725 733, on connaît des moyens de détection de la présence de certains gaz dans l'atmosphère, comprenant un réseau de détecteurs associé à une roue à filtres ayant des bandes passantes différentes, des moyens de conversion en thermogrammes des signaux fournis par les différents filtres, et des moyens d'analyse comparative des contrastes de ces thermogrammes.

On connaît enfin, par le document OPTICAL ENGINEERING, vol. 28, n° 8, août 1989, BELLINGHAM US pages 872-880, "Dual imager and its applications to active vision robot welding surface inspection and two-color pyrometry" de MALDAGUE et al. un imageur double comprenant deux détecteurs en parallèle, associés chacun à un filtre interférentiel, et des moyens permettant de faire la différence des signaux de sortie de ces détecteurs, avec des applications en pyrométrie à deux couleurs, en inspection de surface et en surveillance de soudure automatique.

L'invention a pour objet un procédé et un dispositif de détection d'un gaz présent dans une zone d'espace observée, qui ne soient pas soumis aux inconvénients précités des dispositifs connus.

L'invention a également pour objet un procédé et un dispositif de ce type, permettant une détection à distance d'un gaz présent dans une zone d'espace observée, à partir d'un seul point d'accès à cette zone.

L'invention a encore pour objet un procédé et un dispositif de ce type, permettant une détection rapide en temps réel d'un gaz présent dans une zone d'espace observée.

L'invention a encore pour objet un procédé et un dispositif de ce type, permettant une surveillance à distance de l'environnement atmosphérique d'une zone telle qu'un site industriel, par exemple d'une raffinerie ou d'une usine de produits chimiques.

Elle propose à cet effet un procédé de détection optique à distance d'un gaz, par exemple d'un gaz polluant, présent dans une zone d'espace observée, le procédé consistant à détecter le flux radiatif provenant de cette zone dans une bande de longueurs d'onde comprenant au moins une raie d'absorption caractéristique du gaz recherché, en utilisant pour cette détection deux filtres ayant des bandes de transmission dont l'une comprend la raie d'absorption du gaz et dont l'autre ne la comprend pas, caractérisé en ce que les deux filtres ont des bandes de transmission semblables dont l'une comprend ladite raie d'absorption du gaz et dont l'autre est complémentaire de cette raie d'absortion et en ce que le procédé consiste à détecter à travers un des filtres les flux émis par au moins deux points ou plages à températures différentes de la zone observée, ces flux traversant le gaz recherché, à établir la différence de ces flux, à détecter à travers l'autre filtre les flux émis par ces deux points ou plages et à établir leur différence, puis à faire le rapport de ces deux différences et à en déduire la présence du gaz recherché dans la zone observée.

Le flux ainsi détecté à travers le filtre dont la bande de transmission ne comprend pas la raie d'absorption caractéristique du gaz recherché a une valeur qui n'est pas modifiée par l'absence ou la présence du gaz recherché dans la zone d'espace observée tandis que le flux détecté à travers l'autre filtre a une valeur qui dépend de la présence du gaz recherché et de sa concentration.

Le rapport de ces deux flux est fonction de la concentration du gaz recherché et présente l'avantage d'être sensiblement indépendant, en première approximation, de la température ainsi que de la transmission du système optique du dispositif de détection.

La différence de ces deux flux est également une fonction de la concentration du gaz recherché, mais dépend de la température et des conditions atmosphériques. Il est donc beaucoup plus avantageux de déduire la présence du gaz recherché à partir du rapport des flux détectés séquentiellement à travers les deux filtres précités, qu'à partir de la différence de ces flux.

Par la différence des flux détectés à travers un même filtre provenant de deux points ou plages à températures différentes de la zone observée, on élimine l'émission propre du gaz recherché (qui nuit beaucoup à la sensibilité des techniques radiométriques précitées), et par le rapport de ces différences, on obtient un résultat qui est indépendant des températures de ces deux points ou plages et de l'écart de ces températures.

Ce traitement peut être généralisé à un ensemble de points ou plages répartis de façon prédéterminée dans la zone observée, pour obtenir une cartographie de la concentration du gaz dans la zone observée.

Avantageusement, le procédé selon l'invention consiste à utiliser une caméra ou un imageur thermique pour détecter les flux précités, et à traiter de la façon précitée les signaux électriques fournis par la caméra ou l'imageur thermique et correspondant aux flux précités.

Ces signaux peuvent être numérisés et appliqués à un système de traitement de l'information, qui réalise par intégration des moyennes locales ou géographiques et des moyennes temporelles des signaux, pour réduire le bruit et augmenter la précision de la mesure.

Le procédé selon l'invention peut être utilisé pour la détection de deux gaz différents dans la zone observée et consiste alors à utiliser deux filtres ayant des bandes de transmission semblables en longueurs d'ondes, celle d'un des filtres étant complémentaire d'une raie d'absorption d'un des deux gaz et celle de l'autre filtre étant complémentaire d'une raie d'absorption de l'autre des gaz, et à déduire la présence de l'un ou de l'autre gaz dans la zone observée à partir de la valeur du rapport des flux détectés à travers l'un et à travers l'autre des filtres.

Lorsque la valeur du rapport des flux augmente, on détecte la présence d'un des deux gaz recherchés et, lorsque la valeur de ce rapport diminue, on détecte la présence de l'autre gaz.

En variante, on peut utiliser deux filtres dont l'un a une bande de transmission qui comprend les raies d'absorption des deux gaz recherchés et dont l'autre a une bande de transmission qui est complémentaire de ces raies d'absorption, et déduire la présence de l'un ou de l'autre gaz à partir de la valeur du rapport des flux détectés à travers l'un et à travers l'autre des filtres.

L'invention propose également un dispositif de détection optique à distance d'un gaz dans une zone d'espace observée, ce dispositif permettant en particulier l'exécution du procédé précité et comprenant une caméra ou un imageur thermique comportant au moins un élément sensible aux flux radiatifs dans une bande de longueurs d'onde déterminée et une optique permettant de former une image d'une partie au moins de la zone observée sur ledit élément sensible, au moins deux filtres interposables sur l'axe optique de la caméra ou de l'imageur thermique pour la détection des flux radiatifs de la zone observée à travers l'un et à travers l'autre des filtres, ces filtres ayant des bandes de transmission dans la bande de longueurs d'onde précitée, celle d'un filtre incluant au moins une raie d'absorption du gaz recherché et celle de l'autre filtre n'incluant pas cette raie d'absorption, et des moyens de traitement des signaux fournis par le ou les éléments sensibles, caractérisé en ce que les filtres ont des bandes de transmission semblables dont l'une comprend la raie d'absorption du gaz et dont l'autre est complémentaire de cette raie d'absorption et en ce que le dispositif comprend des moyens de sélection des signaux fournis par le ou les éléments sensibles et correspondant aux flux d'au moins deux points ou plages à températures différentes de la zone observée, les flux de ces deux points ou plages étant détectés à travers le gaz recherché, des moyens d'établissement des différences des flux de ces deux points détectés à travers l'un et l'autre des filtres et des moyens d'établissement du rapport de ces différences.

Ce dispositif peut également comprendre des moyens de comparaison des flux de plages adjacentes de la zone observée, pour l'obtention des différences entre ces flux détectés à travers un des filtres et des différences entre ces flux détectés à travers l'autre filtre, des moyens d'établissement des rapports entre ces différences et des moyens de comparaison de ces rapports, pour établir une cartographie de la concentration du gaz dans la zone observée.

De façon générale, les bandes de transmission des filtres précités ont des largeurs déterminées en longueurs d'ondes pour que les flux reçus par la caméra ou l'imageur thermique correspondent à une plage de réponse linéaire de la caméra ou de l'imageur thermique.

On évite ainsi de travailler dans des conditions où les niveaux de flux reçus seraient soit trop faibles, soit trop élevés (saturation du ou des éléments sensibles).

L'invention sera mieux comprise et d'autres caractéristiques, détails et avantages de celle-ci apparaitront plus clairement à la lecture de la description qui suit, faite à titre d'exemple en référence aux dessins annexés dans lesquels :

 la figure 1 représente très schématiquement un dispositif de détection de gaz selon l'invention;
 la figure 2 est un graphe représentant schématiquement l'allure d'une raie d'absorption d'un gaz;
 les figures 3 et 4 représentent schématique en fonction de la longueur d'onde, les bandes de transmission de deux filtres;
 la figure 5 représente schématiquement la variation en fonction de la température du signal de sortie d'une caméra ou d'un imageur thermique;
 la figure 6 est un graphe représentant les raies d'absorption de deux gaz recherchés;
 la figure 7 est un graphe représentant la bande de transmission d'un filtre utilisable pour la détection de ces deux gaz.

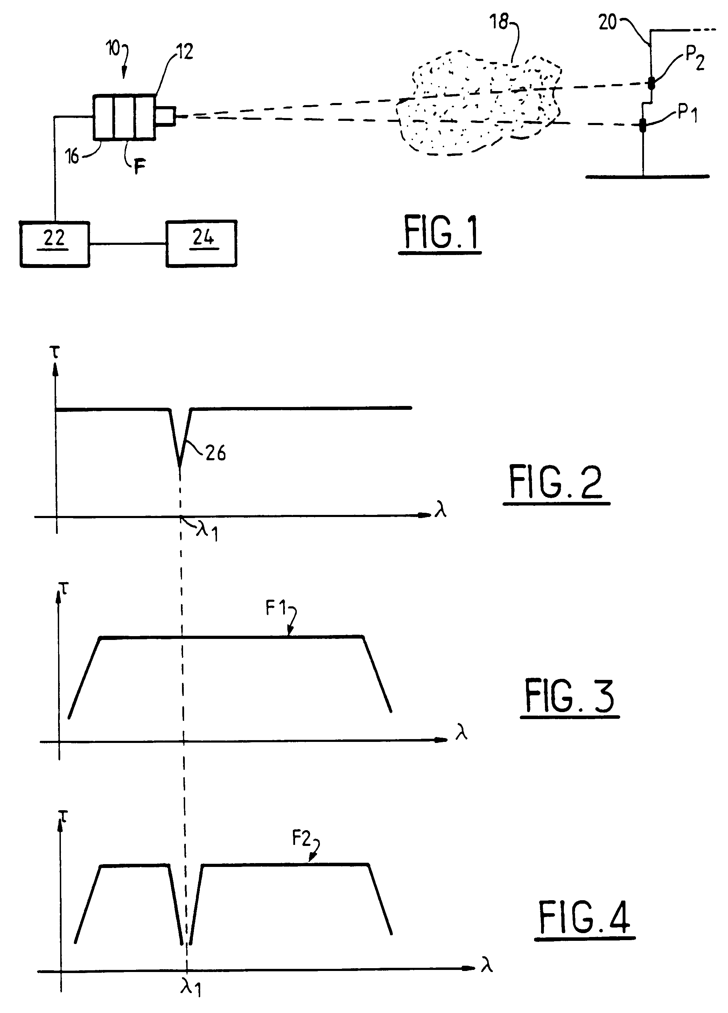

On fera d'abord référence à la figure 1 dans laquelle on a représenté schématiquement un dispositif de détection selon l'invention, et ses conditions d'utilisation.

Ce dispositif comprend une caméra ou un imageur thermique 10 comprenant essentiellement un système optique 12, un filtre F et au moins un élément sensible 16 sur lequel le système optique 12 forme, à travers le filtre F, une image d'une zone d'espace observée, comprenant par exemple un nuage 18 d'un gaz recherché et une scène de fond 20.

La caméra peut être par exemple une caméra de télévision ou analogue, lorsqu'on travaille dans le spectre visible, ou une caméra de thermographie qui est un appareil capable de fournir directement des mesures des températures des zones visées. Par "imageur thermique", on désigne en général un appareil capable de fournir une image de la température d'une zone visée, c'est-à-dire une image dont la couleur ou la densité de gris varie en fonction de la température du point visé.

Selon les cas, et en fonction des longueurs d'onde auxquelles on effectue les mesures ou les détections, la caméra ou l'imageur thermique comprend un seul élément sensible auquel est associé un système de miroirs de balayage, ou bien un groupe ou un ensemble matriciel d'éléments sensibles permettant éventuellement de supprimer le système de miroirs de balayage.

Dans le dispositif représenté en figure 1, les signaux de sortie du ou des éléments sensibles 16 sont appliqués par l'intermédiaire d'un convertisseur analogique-numérique 22 à un système 24 de traitement de l'information tel qu'un micro-ordinateur programmé.

Le dispositif selon l'invention comprend en fait deux filtres F qui sont interposés séquentiellement et à tour de rôle ou en superposition sur l'axe optique de la caméra ou de l'imageur thermique, par exemple au moyen d'un système motorisé.

Ces deux filtres ont des bandes de transmission en longueurs d'onde qui se recoupent en grande partie et qui sont de préférence globalement semblables, mais dont l'une inclut une raie d'absorption du gaz à détecter et dont l'autre est sensiblement complémentaire de cette raie d'absorption. Cette notion va être expliquée plus en détail en référence aux figures 2 à 4.

La figure 2 représente schématiquement la variation de la transmission $\tau$ du gaz à détecter, dans une certaine bande de longueurs d'onde $\lambda$, la courbe de la transmission présentant une raie d'absorption 26 à une longueur d'onde $\lambda 1$, l'amplitude de cette raie d'absorption étant fonction de la concentration du gaz et sa largeur étant par exemple de l'ordre de quelques dizaines ou centaines de nm.

La figure 3 représente schématiquement la courbe de transmission, en fonction de la longueur d'onde, d'un des deux filtres utilisés dans l'invention, par exemple un premier filtre que l'on désignera par la référence F1. Cette bande de transmission inclut la longueur d'onde $\lambda 1$ de la raie d'absorption du gaz à détecter, et s'étend sur une bande de longueurs d'onde qui est supérieure à la largeur de la raie d'absorption 26 du gaz à détecter.

L'autre filtre utilisé dans l'invention, que l'on désignera par la référence F2, a une bande de transmission dont l'allure est représentée en figure 4, qui ne comprend pas la longueur d'onde $\lambda 1$ de la raie d'absorption 26 du gaz à détecter et qui est en quelque sorte complémentaire de cette raie d'absorption par rapport à la bande de transmission du filtre F1 représentée en figure 3.

Ainsi, lorsque le filtre F1 est placé sur l'axe optique de la caméra ou de l'imageur thermique 10, le flux radiatif reçu par l'élément sensible sera fonction de la présence ou de l'absence d'un nuage 18 de gaz à détecter dans la zone observée, et sera également fonction de la concentration de ce gaz.

Par contre, lorsque le filtre F2 est placé sur l'axe optique de la caméra ou de l'imageur thermique 10, le flux qu'il transmet à l'élément sensible est indépendant de la présence ou de l'absence d'un nuage 18 de gaz à détecter dans la zone observée.

Le rapport des flux fournis séquentiellement à l'élément sensible, à travers le filtre F1, puis à travers le filtre F2, fournit une grandeur qui est fonction de la concentration du gaz à détecter dans la zone observée, mais qui est indépendante de la température et de la transmission du système optique.

En variante, on peut placer sur l'axe optique le filtre F1 et faire les mesures, puis placer le filtre F2 sur l'axe optique en laissant en place le filtre F1, et refaire les mesures.

En outre, si l'on détecte séquentiellement, à travers les filtres F1, F2, les flux fournis par deux points ou plages P1 et P2 à températures différentes de la zone observée, ces deux points ou plages étant vus par la caméra ou l'imageur thermique 10 à travers le nuage 18 de gaz à détecter, on peut s'affranchir de l'émission propre du nuage de gaz 18, en faisant la différence des flux des deux points P1 et P2 à travers le filtre F1, puis à travers le filtre F2, et en faisant ensuite le rapport de ces différences.

Les flux des points P1 et P2 transmis à travers le nuage 18 de gaz en direction de la caméra ou de l'imageur thermique peuvent s'écrire de la façon suivante:

$$\Phi_1 = \Phi_{p1} \times \tau_g + \Phi_g$$

$$\Phi_2 = \Phi_{p2} \times \tau_g + \Phi_g$$

avec

$\Phi_{p1}$=flux émis par le point P1 à la température T1
$\Phi_{p2}$=flux émis par le point P2 à la température T2
$\tau_g$=transmission du nuage de gaz 18
$\Phi_g$=flux émis par le nuage de gaz à la température $T_g$

La différence $\Delta$ de ces flux $\Phi_1$ et $\Phi_2$ est donc indépendante du flux émis par le nuage de gaz 18 :

$$\Delta = \Phi_1 - \Phi_2 = ( \Phi_{p1} - \Phi_{p2}) \times \tau_g$$

Soient D1 la différence des signaux de sortie de l'élément sensible 16 correspondant aux flux $\Phi_1$ et $\Phi_2$ reçus à travers le filtre F1, et D2 la différence de ces signaux de sortie correspondant aux flux $\Phi_1$ et $\Phi_2$ reçus à travers le filtre F2.

Ces différences D1 et D2 peuvent être approchées par les relations suivantes :

$$D1 = G \times (\Delta\lambda_1 - \Delta\lambda_g(1-\tau_g))\sigma(T_1^4 - T_2^4)$$

$$D2 = G \times \Delta\lambda_2 \times \sigma (T_1^4 - T_2^4)$$

avec

G=gain global de la caméra ou de l'imageur thermique

$\Delta\lambda_1$= largeur en longueur d'onde de la bande de transmission du filtre F1
$\Delta\lambda_2$=largeur en longueur d'onde de la bande de transmission du filtre F2
$\Delta\lambda_g$=demi-largeur en longueur d'onde de la raie d'absorption du gaz à détecter
$\sigma$ = constante de Stefan

On voit que le rapport D1/D2 est indépendant du gain global de la caméra ou de l'imageur thermique, de l'écart de température des points P1 et P2, des températures de ces deux points, et de la température du gaz à détecter.

Par ailleurs, lorsqu'on utilise une caméra de télévision pour les détections de gaz dans le domaine visible, cette caméra comprend en général trois matrices d'éléments sensibles (une par couleur fondamentale), dont chacune est associée à un filtre de couleurs. Ces filtres de couleurs peuvent être remplacés par des filtres selon l'invention, ce qui permet de se dispenser d'un système motorisé de déplacement des filtres, et ce qui permet également des détections simultanées de flux à travers des filtres différents.

On peut dans tous les autres cas détecter ces flux de façon simultanée, en utilisant deux éléments sensibles ou deux groupes d'éléments sensibles en parallèle, chaque élément sensible ou groupe d'éléments sensibles étant associé à un filtre précité.

Pour réduire le bruit à la détection et augmenter la précision des mesures, l'invention prévoit également de réaliser, au moyen du système de traitement de l'information 24, des moyennes locales ou géographiques sur les signaux fournis par le ou les éléments sensibles 16 et correspondant aux flux reçus de points situés dans le voisinage immédiat des points P1 et P2 respectivement, ou de points compris dans les plages P1 et P2, et de réaliser également une moyenne temporelle de ces signaux, sur une période de temps prédéterminée.

L'invention prévoit également de diviser la zone observée en plages de mesure, de détecter à travers un premier filtre les flux émis par plusieurs points de chaque plage et de faire une moyenne des flux détectés dans cette plage, de comparer la moyenne pour une plage aux moyennes pour les plages adjacentes et d'obtenir les différences entre ces moyennes pour l'ensemble des plages de la zone observée, d'exécuter également ces opérations avec le second filtre pour obtenir d'autres différences de moyennes pour l'ensemble des plages de mesure, de faire les rapports entre les différences de moyennes obtenues avec le premier filtre et les différences des moyennes obtenues avec le second filtre, et de déduire des valeurs de ces rapports une cartographie de la concentration du gaz dans la zone observée. On vérifie que les différences précitées ne sont pas nulles, avant d'en faire le rapport.

Selon un autre aspect de l'invention, il est avantageux que les filtres F1 et F2 aient des bandes de transmission relativement larges par rapport à la raie d'absorption 26 du gaz à détecter, de façon à ce que les niveaux de flux reçus par la caméra ou l'imageur thermique 10 correspondent à une réponse sensiblement linéaire du ou des éléments sensibles 16.

De plus, ces filtres à bande de transmission relativement large selon l'invention sont peu émissifs, et peuvent être utilisés sans refroidissement, ce qui constitue un avantage pratique majeur par rapport aux filtres à bande étroite utilisés de façon classique dans les techniques de radiométrie et spectroscopie.

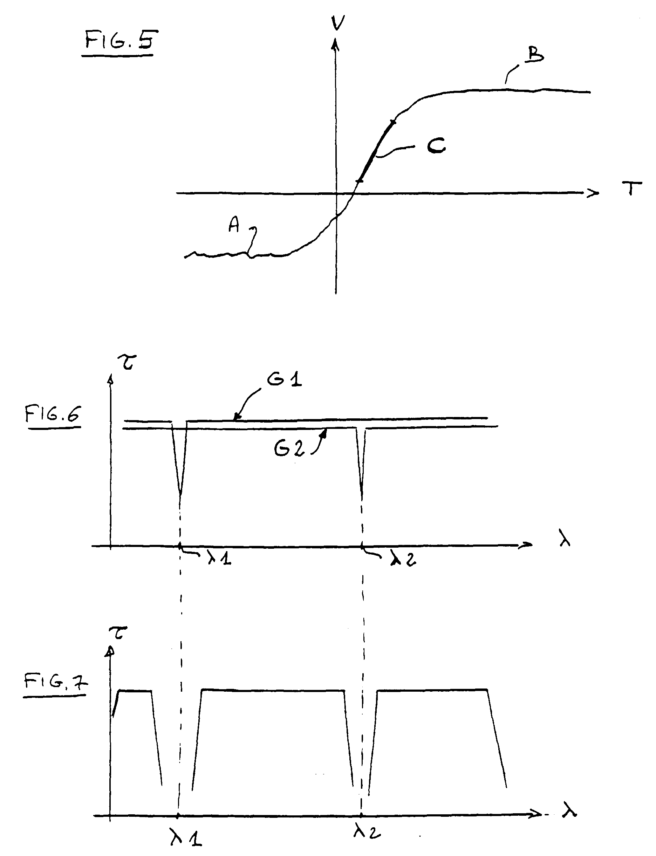

On a représenté à titre d'illustration en figure 5, la variation du signal de sortie (en volts) d'un tel élément sensible en fonction de la température. Il faut éviter que les points de fonctionnement correspondent aux parties A et B de la courbe et on détermine la largeur des bandes de transmission des filtres F1 et F2 pour se trouver dans la partie C de celle-ci.

Lorsque l'on souhaite détecter la présence de deux gaz différents dans l'atmosphère, dont l'un G1 présente une raie d'absorption à une longueur d'onde $\lambda 1$ et dont l'autre G2 présente une raie d'absorption à une longueur d'onde $\lambda 2$ comme représenté schématiquement en figure 6, on peut pour cela utiliser un filtre dont la bande de transmission comprend les deux longueurs d'onde $\lambda 1$ et $\lambda 2$, et un filtre dont la bande de transmission est complémentaire des raies d'absorption aux longueurs d'onde $\lambda 1$ et $\lambda 2$ comme représenté schématiquement en figure 7. Dans ce cas, on peut déduire de la valeur du rapport D1/D2 la présence de l'un et/ou de l'autre gaz dans la zone observée, sans pouvoir identifier celui des deux gaz qui est présent dans cette zone.

On peut également utiliser deux filtres dont l'un a une bande de transmission complémentaire de la raie d'absorption du gaz G1 à la longueur d'onde $\lambda 1$, et dont l'autre a une bande de transmission complémentaire de la raie d'absorption du gaz G2 à la longueur d'onde $\lambda 2$. Dans ce cas, la valeur du rapport D1/D2 va permettre d'identifier celui des deux gaz qui est présent dans la zone observée, la valeur de ce rapport augmentant en présence d'un des gaz et diminuant en présence de l'autre gaz.

On peut également, pour la détection de plusieurs gaz différents dans la zone observée, utiliser des filtres dont chacun a une bande de transmission complémentaire d'une raie d'absorption caractéristique d'un gaz à détecter. Dans ce cas, il faudra comparer deux à deux les flux détectés séquentiellement à travers les filtres et les valeurs des rapports Di/Dj permettront d'identifier le ou les gaz détectés dans la zone observée.

On notera qu'une caméra ou un imageur thermique est en général déjà équipée d'un filtre, qui est plus ou moins équivalent dans certaines conditions, au filtre F1 incluant la raie d'absorption du gaz à détecter. On pourrait donc se contenter d'utiliser un seul filtre F2 et faire des mesures lorsque ce filtre est placé sur l'axe optique de la caméra ou de l'imageur thermique et lorsqu'il est écarté de cet axe optique. Cette variante ne sort donc pas du cadre de l'invention.

## Revendications

1. Procédé de détection optique à distance d'un gaz, par exemple d'un gaz polluant, présent dans une zone d'espace observée, consistant à détecter le flux radiatif provenant de cette zone dans une bande de longueurs d'onde comprenant au moins une raie d'absorption (26) caractéristique du gaz recherché, en utilisant pour cette détection deux filtres F1 et F2 ayant des bandes de transmission dont l'une comprend la raie d'absorption du gaz et dont l'autre ne la comprend pas, caractérisé en ce que les deux filtres F1 et F2 ont des bandes de transmission semblables dont l'une comprend ladite raie d'absorption du gaz et dont l'autre est complémentaire de cette raie d'absortion et en ce que le procédé consiste à détecter à travers un des filtres les flux émis par au moins deux points ou plages P1, P2 à températures différentes de la zone observée, ces flux traversant le gaz recherché, à établir la différence de ces flux, à détecter à travers l'autre filtre les flux émis par ces deux points ou plages et à établir leur différence, puis à faire le rapport de ces deux différences et à en déduire la présence du gaz recherché dans la zone observée.

2. Procédé selon la revendication 1, caractérisé en ce qu'il consiste à détecter les flux précités à travers l'un des filtres F1, puis à travers les deux filtres F1, F2 superposés.

3. Procédé selon la revendication 1 ou 2, caractérisé en ce qu'il consiste à utiliser une caméra ou un imageur thermique (10) pour détecter les flux précités, et à traiter de la façon précitée les signaux électriques fournis par la caméra ou l'imageur thermique et correspondant aux flux précités.

4. Procédé selon la revendication 3, caractérisé en ce qu'il consiste à numériser les signaux fournis par la caméra ou l'imageur thermique (10), à appliquer les signaux numérisés à un système (24) de traitement de l'information, et à réaliser par intégration au moyen de ce système des moyennes locales ou géographiques et des moyennes temporelles desdits signaux pour réduire le bruit et augmenter la précision de la mesure.

5. Procédé selon l'une des revendications précédentes, caractérisé en ce qu'il consiste à détecter à travers l'un et l'autre des filtres les flux de plages réparties de façon prédéterminée dans la zone observée, à comparer le flux d'une plage aux flux des plages adjacentes pour obtenir des premières différences entre les flux détectés à travers un des filtres et des secondes différences entre les flux détectés à travers l'autre filtre, et à déduire des rapports entre les premières différences et les secondes différences une cartographie de la concentration du gaz dans la zone observée.

6. Procédé selon l'une des revendications précédentes, caractérisé en ce que, pour la détection de deux gaz différents dans la zone observée, il consiste à utiliser deux filtres ayant des bandes de transmission semblables, celle d'un de ces filtres étant complémentaire d'une raie d'absorption caractéristique d'un des deux gaz, et celle de l'autre filtre étant complémentaire d'une raie d'absorption caractéristique de l'autre des gaz, et à déduire la présence de l'un ou de l'autre gaz dans la zone observée à partir de la valeur du rapport des flux détectés à travers l'un et à travers l'autre des filtres.

7. Procédé selon l'une des revendications 1 à 5, caractérisé en ce que, pour la détection de deux gaz différents dans la zone observée, il consiste à utiliser deux filtres ayant des bandes de transmission semblables, celle d'un des filtres comportant une raie d'absorption caractéristique d'un des deux gaz et une autre raie d'absorption caractéristique de l'autre gaz, la bande de transmission de l'autre filtre étant complémentaire de ces raies d'absorption, et à déduire la présence de l'un ou de l'autre gaz dans la zone observée à partir de la valeur du rapport des flux détectés à travers l'un et l'autre des filtres.

8. Dispositif de détection optique à distance d'un gaz, par exemple polluant, dans une zone d'espace observée, ce dispositif permettant en particulier l'exécution du procédé décrit dans l'une des revendications précédentes et comprenant une caméra ou un imageur thermique (10) comportant au moins un élément (16) sensible aux flux radiatifs dans une bande de longueurs d'onde déterminée et une optique (12) permettant de former une image d'une partie au moins de la zone observée sur ledit élément sensible, au moins deux filtres F1, F2 interposables sur l'axe optique de la caméra ou de l'imageur thermique pour la détection des flux radiatifs de la zone observée à travers l'un et à travers l'autre des filtres, ces filtres ayant des bandes de transmission dans la bande de longueurs d'onde précitée, celle d'un filtre incluant au moins une raie d'absorption du gaz recherché et celle de l'autre filtre n'incluant pas cette raie d'absorption, et des moyens (24) de traitement des signaux fournis par le ou les éléments sensibles (16), caractérisé en ce que les filtres F1 et F2 ont des bandes de transmission semblables dont l'une comprend la raie d'absorption du gaz et dont l'autre est complémentaire de cette raie d'absorption et en ce que le dispositif comprend des moyens de sélection des signaux fournis par le ou les éléments sensibles (16) et correspondant aux flux d'au moins deux points ou plages P1 et P2 à températures différentes de la zone observée, les flux de ces deux points ou plages étant détectés à travers le gaz recherché, des moyens d'établissement des différences des flux de ces deux points ou plages détectés à travers l'un, puis l'autre des filtres, et des moyens d'établissement du rapport de ces différences.

9. Dispositif selon la revendication 8, caractérisé en ce qu'il comprend des moyens de comparaison des flux de plages adjacentes de la zone observée, pour l'obtention des différences entre ces flux détectés à travers un des filtres et des différences entre ces flux détectés à travers l'autre filtre, des moyens d'établissement des rapports entre ces différences et des moyens de comparaison de ces rapports, pour établir une cartographie de la concentration du gaz dans la zone observée.

10. Dispositif selon la revendication 8 ou 9, caractérisé en ce qu'il comprend des moyens (22) de numérisation des signaux fournis par le ou les éléments sensibles (16) et des moyens (24) de traitement de l'information recevant ces signaux numérisés et programmés pour traiter ces signaux de la façon précitée.

11. Dispositif selon l'une des revendications 8 à 10, caractérisé en ce que, pour la détection d'un deuxième gaz présent dans la zone observée et caractérisé par une autre raie d'absorption dans la bande de longueurs d'onde précitée, les bandes de transmission des deux filtres F1, F2 précitées sont l'une complémentaire de la raie d'absorption du premier gaz et l'autre complémentaire de la raie d'absorption du deuxième gaz.

12. Dispositif selon l'une des revendications 8 à 11, caractérisé en ce que, pour la détection d'autres gaz présents dans la zone observée et caractérisés par d'autres raies d'absorption dans la bande de longueurs d'onde précitée, les bandes de transmission des deux filtres précitées sont déterminées pour que l'une inclut les raies d'absorption des gaz recherchés et l'autre soit complémentaire de ces raies d'absorption.

13. Dispositif selon l'une des revendications 8 à 12, caractérisé en ce que les bandes de transmission des filtres précitées ont des largeurs déterminées en longueurs d'onde pour que les flux reçus par la caméra ou l'imageur thermique correspondent à une plage de réponse linéaire de la caméra ou imageur thermique.

**Patentansprüche**

1. Verfahren zur optischen Fernerfassung eines Gases, zum Beispiel eines umweltverschmutzenden Gases, das sich in einem beobachteten Raumgebiet befindet, welches darin besteht, den aus diesem Gebiet stammenden Strahlenfluß in einem Wellenlängenband zu erfassen, das wenigstens eine für das gesuchte Gas charakteristische Absorptionslinie (26) umfaßt, indem für diese Erfassung zwei Filter F1 und F2 verwendet werden, die Durchlaßbereiche aufweisen, von denen der eine die Absorptionslinie des Gases umfaßt und von denen der andere sie nicht umfaßt, dadurch gekennzeichnet, daß die zwei Filter F1 und F2 ähnliche Durchlaßbereiche aufweisen, von denen der eine die Absorptionslinie des Gases umfaßt und von denen der andere komplementär zu dieser Absorptionslinie ist, und daß das Verfahren darin besteht, die durch wenigstens zwei Punkte oder Bereiche P1, P2 mit verschiedenen Temperaturen des beobachteten Gebietes ausgesendeten Flüsse durch eines der Filter zu erfassen, wobei diese Flüsse das gesuchte Gas durchqueren, die Differenz dieser Flüsse zu bilden, die durch diese zwei Punkte oder Bereiche ausgesendeten Flüsse durch das andere Filter zu erfassen und deren Differenz zu bilden, dann das Verhältnis dieser zwei Differenzen zu bilden und aus diesem die Anwesenheit des gesuchten Gases in dem beobachteten Gebiet abzuleiten.

2. Verfahren nach Anspruch 1, dadurch gekennzeichnet, daß es darin besteht, die vorerwähnten Flüsse durch eines der Filter F1, dann durch die überlagerten zwei Filter F1, F2 zu erfassen.

3. Verfahren nach Anspruch 1 oder 2, dadurch gekennzeichnet, daß es darin besteht, eine Kamera oder ein thermisches Bildgerät (10) zu verwenden, um die vorerwähnten Flüsse zu erfassen, und die elektrischen Signale, die durch die Kamera oder das thermische Bildgerät geliefert werden und den vorerwähnten Flüssen entsprechen, auf die vorerwähnte Weise zu verarbeiten.

4. Verfahren nach Anspruch 3, dadurch gekennzeichnet, daß es darin besteht, die durch die Kamera oder das thermische Bildgerät (10) gelieferten Signale zu digitalisieren, die digitalisierten Signale an ein System (24) zur Verarbeitung der Information anzulegen und durch Integration mittels dieses Systemes lokale oder geographische Mittelwerte und zeitliche Mittelwerte der Signale zu realisieren, um das Geräusch zu reduzieren und die Genauigkeit der Messung zu erhöhen.

5. Verfahren nach einem der vorhergehenden Ansprüche, dadurch gekennzeichnet, daß es darin besteht, die Flüsse von verteilten Bereichen durch das eine oder das andere der Filter auf vorbestimmte Weise in dem beobachteten Gebiet zu erfassen, den Fluß des einen Bereiches mit den Flüssen von benachbarten Bereichen zu vergleichen, um erste Differenzen zwischen den durch eines der Filter erfaßten Flüssen und zweite Differenzen zwischen den durch das andere Filter erfaßten Flüssen zu erhalten, und aus den Verhältnissen zwischen den ersten Differenzen und den zweiten Differenzen eine Kartographie der Konzentration des Gases in dem beobachteten Gebiet abzuleiten.

6. Verfahren nach einem der vorhergehenden Ansprüche, dadurch gekennzeichnet, daß es zur Erfassung von zwei unterschiedlichen Gasen in dem beobachteten Gebiet darin besteht, zwei Filter zu verwenden, die ähnliche Durchlaßbereiche aufweisen, wobei derjenige von einem dieser Filter komplementär zu einer für eines der zwei Gase charakteristischen Absorptionslinie ist und derjenige des anderen Filters komplementär zu einer für das andere der Gase charakteristischen Absorptionslinie ist, und die Anwesenheit des einen oder des anderen Gases in dem beobachteten Gebiet auf der Grundlage des Wertes des Verhältnisses der durch das eine und durch das andere der Filter ermittelten Flüsse abzuleiten.

7. Verfahren nach einem der Ansprüche 1 bis 5, dadurch gekennzeichnet, daß es für die Erfassung von zwei verschiedenen Gasen in dem beobachteten Gebiet darin besteht, zwei Filter zu verwenden, die ähnliche Durchlaßbereiche aufweisen, wobei derjenige von einem der Filter eine zu dem einen der zwei Gase charakteristische Absorptionslinie und eine andere zu dem anderen Gas charakteristische Absorptionslinie umfaßt, der Durchlaßbereich des anderen Filters komplementär zu diesen Absorptionslinien ist, und die Anwesenheit des einen oder des anderen Gases in dem beobachteten Gebiet auf der Grundlage des Wertes des Verhältnisses der durch das eine und das andere der Filter erfaßten Flüsse abzuleiten.

8. Vorrichtung zur optischen Fernerfassung eines, zum Beispiel umweltverschmutzenden, Gases in einem beobachteten Raumgebiet, wobei diese Vorrichtung insbesondere die Durchführung des in einer der vorhergehenden Ansprüche beschriebenen Verfahrens gestattet und eine Kamera oder ein thermisches Bildgerät (10), die bzw. das wenigstens ein Element (16), welches auf Strahlenflüsse in einem bestimmten Wellenlängenbereich empfindlich ist, und eine Optik (12), welche gestattet, ein Bild von wenigstens einem Teil des über das empfindliche Element beobachteten Gebietes zu bilden, wenigstens zwei Filter F1, F2, welche auf der optischen Achse der Kamera oder des thermischen Bildgerätes für die Erfassung der Strahlenflüsse des durch das eine und durch das andere der Filter beobachteten Gebietes angeordnet werden können, umfaßt, wobei diese Filter Durchlaßbereiche in dem vorerwähnten Wellenlängenbereich aufweisen, wobei derjenige von einem Filter wenigstens eine Absorptionslinie des gesuchten Gases einschließt und derjenige von dem anderen Filter diese Absorptionslinie nicht einschließt, und Einrichtungen (24) zur Verarbeitung von durch das oder die empfindlichen Elemente (16) gelieferten Signale umfaßt, dadurch gekennzeichnet, daß die Filter F1 und F2 ähnliche Durchlaßbereiche aufweisen, von denen der eine die Absorptionslinie des Gases umfaßt und von denen der andere komplemetär zu dieser Absorptionslinie ist, und daß die Vorrichtung Einrichtungen zur Auswahl der Signale, die durch das oder die empfindlichen Elemente (16) geliefert sind und den Flüssen von wenigstens zwei Punkten oder Bereichen P1 und P2 mit unterschiedlichen Temperaturen des beobachteten Gebietes entsprechen, wobei die Flüsse dieser zwei Punkte oder Bereiche durch das gesuchte Gas erfaßt sind, Einrichtungen zur Bildung von Differenzen der Flüsse dieser durch das eine, dann das andere der Filter erfaßten zwei Punkte oder Bereiche und Einrichtungen zur Bildung des Verhältnisses dieser Differenzen umfaßt.

9. Vorrichtung nach Anspruch 8, dadurch gekennzeichnet, daß sie Einrichtungen zum Vergleich der Flüsse von benachbarten Bereichen des beobachteten Gebietes zum Erhalt der Differenzen zwischen diesen durch eines der Filter erfaßten Flüsse und der Differenzen zwischen diesen durch das andere Filter erfaßten Flüsse, Einrichtungen zur Bildung der Verhältnisse zwischen diesen Differenzen und Einrichtungen zum Vergleich dieser Verhältnisse umfaßt, um eine Kartographie der Konzentration des Gases in dem beobachteten Gebiet zu bilden.

10. Vorrichtung nach Anspruch 8 oder 9, dadurch gekennzeichnet, daß es Einrichtungen (22) zur Digitalisierung von durch das oder die empfindlichen Elemente (16) gelieferten Signale und Einrichtungen (24) zur Verarbeitung der diese digitalisierten und programmierten Signale empfangenden Information umfaßt, um diese Signale auf die vorerwähnte Weise zu verarbeiten.

11. Vorrichtung nach einem der Ansprüche 8 bis 10, dadurch gekennzeichnet, daß für die Erfassung eines in dem beobachteten Gebiet vorhandenen und durch eine andere Absorptionslinie in dem vorerwähnten Wellenlängenbereich charakterisierten zweiten Gases die Durchlaßbereiche der vorerwähnten zwei Filter F1, F2 zum einen komplementär zu der Absorptionslinie des ersten Gases und zum anderen komplementär zu der Absorptionslinie des zweiten Gases sind.

12. Vorrichtung nach einem der Ansprüche 8 bis 11, dadurch gekennzeichnet, daß für die Erfassung von in dem beobachteten Gebiet vorhandenen und durch weitere Absorptionslinien in dem vorerwähnten Wellenlängenbereich charakterisierten weiteren Gasen die Durchlaßbereiche der zwei vorerwähnten Filter bestimmt sind, damit der eine die Absorptionslinien der gesuchten Gase einschließt und der andere komplementär zu diesen Absorptionslinien ist.

13. Vorrichtung nach einem der Ansprüche 8 bis 12, dadurch gekennzeichnet, daß die Durchlaßbereiche der vorerwähnten Filter Längen aufweisen, die in Wellenlängen bestimmt sind, damit die durch die Kamera oder das thermische Bildgerät empfangenen Flüsse einem linearen Antwortbereich der Kamera oder des thermischen Bildgerätes entsprechen.

**Claims**

1. A method for remote optical detection of a gas, e. g. a polluting gas, present in an observed volume, the method consisting in detecting the radiant flux coming from said volume in a band of wavelengths including at least one absorption line (26) characteristic of the looked-for gas, in using for said detection two filters F1 and F2 having transmission bands, one of which includes the absorption line of the gas, and the other of which does not, the method being characterized in that the two filters F1 and F2 have similar transmission bands, one including said gas absorption line, and the other being complementary to said absorption line, and in that the method consists in detecting through one of the filters the fluxes emitted by at least two points or areas P1, P2 at different temperatures in the observed volume, said fluxes passing through the looked-for gas, in establishing the difference between said fluxes, in detecting through the other filter the fluxes emitted by said two points or areas and in establishing the difference therebetween, and then in taking the ratio of said two differences and deducing therefrom the presence in the observed volume of the looked-for gas.

2. A method according to claim 1, characterized in that it consists in detecting the above-mentioned fluxes through one of the filters F1, and then through both filters F1, F2 while they are superposed.

3. A method according to claim 1 or 2, characterized in that it consists in using a thermal imager or camera (10) for detecting the above-mentioned fluxes, and in processing the electrical signals provided by the thermal imager or camera in the above-mentioned manner, which signals correspond to the above-mentioned fluxes.

4. A method according to claim 3, characterized in that it consists: in digitizing the signals provided by the thermal imager or camera (10); in applying the digitized signals to a data processing system (24); and in using said system to obtain time averages and local or geographic averages on said signals by integration in order to reduce noise and increase measurement accuracy.

5. A method according to any preceding claim, characterized in that it consists: in detecting fluxes from areas that are distributed in predetermined manner within the observed volume through one filter and then through the other filter; in comparing the flux from an area with the fluxes from adjacent areas to obtain first differences between the fluxes detected through one of the filters and second differences between the fluxes detected through the other filter; and in deducing a map of gas concentration in the observed volume from the ratios between the first differences and the second differences.

6. A method according to any preceding claim, characterized in that, in order to detect two different gases in the observed volume, the method consists in using two filters having similar transmission bands, the band of one of the filters being complementary to an absorption line characteristic of one of the two gases, and the band of the other filter being complementary to an absorption line characteristic of the other one of the gases, the method further consisting in deducing the presence of one or other of the gases in the observed volume from the value of the ratio of the fluxes detected through each of the two filters.

7. A method according to any one of claims 1 to 5, characterized in that, in order to detect two different gases in the observed volume, the method consists in using two filters having similar transmission bands, the band of one of the filters including an absorption line characteristic of one of the two gases and another absorption line characteristic of the other gas, the transmission band of the other filter being complementary to said absorption lines, and in deducing the presence of one or other of the gases in the observed volume on the basis of the value of the ratio of the fluxes detected through each of the two filters.

8. Apparatus for remote optical detection of a gas, in an observed volume, e.g. a polluting gas, the apparatus serving in particular to perform the method described in any of the preceding claims and comprising: a thermal imager or camera (10) including at least one sensitive element (16) sensitive to radiant fluxes in a determined band of wavelengths, and an optical system (12) enabling an image of at least a portion of the observed volume to be formed on said sensitive element; at least two filters F1, F2 suitable for being interposed on the optical axis of the thermal imager or camera for detecting the radiant fluxes of the observed volume through each of the filters, said filters having similar transmission bands in the above-mentioned band of wavelengths, the band of one of the filters including at least one absorption line of the looked-for gas and the band of the other filter being complementary to said absorption line; and signal processing means (24) comprising means for selecting the signals provided by said sensitive element(s) (16), the apparatus being characterized in that the filters F1 and F2 have similar transmission bands, one of which includes the gas absorption line and the other of which is complementary to said absorption line, and in that the apparatus includes means for selecting the signals provided by the sensitive elements(s) (16) and corresponding to the fluxes from at least two points or areas P1 and P2 at different temperatures in the observed volume, the fluxes from these two points or areas being detected through the looked-for gas, means for establishing the differences between the fluxes from these two points or areas as detected through one and then the other one of the filters, and means for taking the ratio of these differences.

9. Apparatus according to claim 8, characterized in that it comprises means for comparing fluxes from adjacent areas in the observed volume, for obtaining the differences between said fluxes as detected through one of the filters and the differences between these fluxes as detected through the other filter, means for establishing the ratios between said differences, and means for comparing said ratios to establish a map of the concentration of the gas in the observed volume.

10. Apparatus according to claim 8 or 9, characterized in that it comprises means (22) for digitizing the signals provided by the sensitive element(s) (16) and data processing means (24) receiving said digitized signals and programmed to process said signals in the above-specified manner.

11. Apparatus according to any one of claims 8 to 10, characterized in that, to detect a second gas present in the observed volume and characterized by another absorption line in the above-mentioned band of wavelengths, the transmission bands of the two above-mentioned filters F1, F2 are respectively complementary to the absorption line of the first line and to the absorption line of the second gas.

12. Apparatus according to any one of claims 8 to 11, characterized in that, to detect other gases present in the observed volume and characterized by other absorption lines in the above-specified band of wavelengths, the transmission bands of the two above-mentioned filters are determined so that one of them includes the absorption lines of the looked-for gases while the other one is complementary to said absorption lines.

13. Apparatus according to any one of claims 8 to 12, characterized in that the transmission bands of the above-mentioned filters are of widths in wavelength that are so determined that the fluxes received by the thermal imager or camera correspond to a linear response region of the thermal imager or camera.

FIG.1

FIG.2

FIG. 3

FIG.4

FIG.5

FIG.6

FIG.7